# EUROPEAN PATENT APPLICATION

(11) **EP 4 269 950 A1**
(43) Date of publication of application: **01.11.2023**
(21) Application number: 23170115.2
(22) Date of filing: 26.04.2023
(51) Int. Cl.: G01D 4/00, G01D 11/24

(54) **A METER READING DEVICE**

(30) Priority: 29.04.2022 GB 202206343
(71) Applicant: Deer Technology Limited, Port Talbot Neath Port Talbot SA12 7AX (GB)
(72) Inventor: Jackson, Garry Raymond, Port Talbot, SA12 7AX (GB); Mort, Hugh William, Port Talbot, SA12 7AX (GB)
(74) Representative: Dempster, Benjamin John Naftel

(57) **Abstract**

The invention provides a meter reading device 4 comprising a plurality of cameras 112 to be directed at a meter display, the cameras 112 being mounted in and encapsulated by a unitary block of material 15 which is transparent to optical radiation, the block 15 defining a meter engaging end surface 76, the cameras 112 being directed towards the meter engaging end surface 76 of the block15.

## Description

This invention relates to a meter reading device.

Utility meters, for example for water or electricity or gas, may be mounted on a pipe or cable in a cupboard in a house or garage, or may be in a pit in the ground. A meter in a cupboard will be accessed by opening a door to the cupboard. A ground-based meter will be accessed by lifting an access cover.

Utility meters for water, gas and electricity represent consumption on either mechanical counters or digital LCD displays, the register, a row of numbers. A significant proportion of meters currently installed are intended for human reading of the consumption register only and provide no method to provide the consumption data electronically for billing or leak detection purposes.

A known utility meter reading device is disclosed in WO2019/81877, the subject matter of which is incorporated herein by reference. The device can be attached to a utility meter and uses cameras to take images of the display of the utility meter. The cameras and other electronics are mounted on two PCBs mounted in a casing above a prism block carried by the casing. The prism block is arranged to be glued to the face of a meter so that the device can read the alphanumeric register of the meter.

According to one aspect of the invention, there is provided a meter reading device comprising a plurality of cameras to be directed at a meter display, the cameras being mounted in and encapsulated by a unitary block of material which is transparent to optical radiation, the block defining a meter engaging end surface, the cameras being directed towards the meter engaging end surface of the block.

In this way, the cameras are surrounded by and enclosed by the block to provide environmental protection. In particular where the meter is in a pit, the meter may have water or mud on it, or may even be submerged. By means of the invention, the cameras are protected. Also, the optical path from the cameras to the meter engaging end surface is protected so as to be impervious to any contamination by mud or water, and entirely clean and consistent. Furthermore, any possible problems due to misalignment of optical electronics to optical components and the meter surface is avoided, as these parts are held in fixed relationship within the block.

In a preferred embodiment, the block defines an input surface through which optical radiation can be directed to pass through the block to the meter engaging surface.

In this way, shadows can be eliminated and optical radiation exposure can be uniform and consistent and bright. This is particularly of interest where the meter engaging surface is to be adhered to a meter display glass by UV curable adhesive. Non-cured or weakly cured areas can be avoided, so a good strong bond is achieved across the meter engaging surface.

According to another aspect of the invention, there is provided a meter reading device comprising a plurality of cameras to be directed at a meter display, the cameras being directed through a unitary block of material which is transparent to optical radiation, the block defining a meter engaging end surface, the cameras being directed towards the meter engaging end surface of the block, wherein the block defines an input surface through which optical radiation can be directed to pass through the block to the meter engaging surface.

The block may take any suitable form and may include a step defining the input surface. The step may conveniently be offset to one side of the path from the cameras to the meter engaging surface. In one embodiment, the step is to one side of the cameras. In one embodiment, the device includes a cover, the cover covering part of the block to protect the block, the step extending beyond the cover.

The input surface may be at least two thirds as wide as the meter engaging surface, and preferably is at least 80% as wide as the meter engaging surface, and most preferably is at least as wide as the meter engaging surface. This ensures good light saturation at the meter engaging surface. In a preferred embodiment, the input surface may be substantially the same width as the meter engaging surface.

The input surface may be at no greater than 45 degrees to the meter engaging surface, and preferably is at no greater than 30 degrees to the meter engaging surface.

The distance between the cameras and the meter engaging end surface may be any suitable distance and may be 15mm or more, or 20mm or more. The distance between the cameras and the meter engaging end surface may be 40mm or less, and may be 30mm or less, or may be 25mm or less.

The device may also include at least one source of optical radiation directed towards the meter engaging end surface of the block to illuminate the meter, the at least one source of optical radiation is preferably mounted in the block. In this way, the source of optical radiation is also protected by the block, and the path for radiation from the source to the meter engaging surface is clear and consistent, as it is simply through just the block. The protected optical path with integrated illumination and sensor simplifies any change detection or image processing algorithm by providing a consistent sensing environment.

The device may also include a memory which may also be mounted in the block. In this way, the memory is protected, too.

The device may also include communication means for communicating data from the cameras to an external location, and the communication means may also be mounted in the block.

The device may also include a processor, and the processor may be mounted in the block.

The device may also include a battery, and the battery may also be mounted in the block. In another embodiment, the device may be powered by an external power source connected to the device by a cable, and the end of the power supply cable may be sealed in the block.

The device may also include a cable through which an output signal can be sent externally, and the end of the cable may be sealed in the block.

The cameras may be mounted on a board, and the board may be mounted in the block.

The cameras may be mounted on a PCB, and the PCB may be mounted in the block.

Indeed, in a preferred embodiment, all of the electronics of the device are mounted on one or more PCBs, and the or each PCB is preferably mounted in the block. In this way, all of the electronics of the device is protected within the block from the environment and any external actions.

The meter engaging surface may take any suitable form and may be smooth, but in a preferred embodiment, the meter engaging surface is textured, and may be rough. Creating a textured or rough surface on the bonding surface of the block to ensures the bonding agent grips the device well. The textured or rough surface can also have the effect that the bonding agent grips the device more than the meter surface to facilitate clean removal from the meter, as the device will take the bonding agent with it when pulled off the meter.

According to another aspect of the invention, there is provided a utility meter with a device according to the preceding aspect of the invention adhered to the meter so that the cameras are directed at the alphanumeric display of the meter.

The device may be adhered to the meter by UV cured adhesive. Where an input surface is provided on the block, the UV will be well cured, with no uncured or weakly cured areas.

According to another aspect of the invention, there is provided a method of making a meter reading device, the method comprising the steps of: holding a plurality of cameras in place; casting a block of material around the cameras so that the cameras are surrounded by the block, and so that the block defines a meter engaging end surface, and so that the cameras are directed towards the meter engaging end surface of the block, the block of material being transparent to optical radiation.

In this way, the cameras are surrounded by and enclosed by the block to provide environmental protection. In particular where the meter is in a pit, the meter may have water or mud on it, or may even be submerged. By means of the invention, the cameras are protected. Also, the optical path from the cameras to the meter engaging end surface is protected so as to be impervious to any contamination by mud or water, and entirely clean and consistent.

The cameras may be mounted on a board which may be surrounded by the block. In this way, the cameras are protected and the optical path to the meter engaging end surface of the block is clear. The cameras may be mounted on a PCB, which may be mounted in the block. Indeed, all of the electronics of the device may be mounted on one or more PCBs and may be mounted in the block.

The device may include a cover, and the method may include casting the block of material onto the cover. This overmoulding can form a strong single part with no voids. The cover may be generally tray shaped. The block may substantially fill the cover. This results in a particularly strong construction. Where the device includes a board, the cover may include means for supporting the board. In this way, the material for the block can be cast around the board to surround it on the top and bottom surfaces. The means for supporting the board may take any suitable form, and in one embodiment, the cover may include two opposed walls, each opposed wall including at least one feature to support the board. Preferably, the cover includes clip means and the board is clipped onto the cover before casting. The cover may include two opposed clips to clip the board.

According to a further aspect of the invention, there is provided a method in relation to a meter reading device, the method comprising the steps of: providing a plurality of cameras in a block of material, the block of material being transparent to optical radiation, the block defining a meter engaging end surface, the cameras being directed towards the meter engaging end surface of the block, the block also defining an input surface facing the meter engaging surface, the method including the steps of: applying UV curable adhesive to one or both of the meter and the meter engaging end surface, placing the device in position on the meter, and directing UV radiation through the input surface of the block to the meter engaging surface to cure the UV curable adhesive.

The method may include providing a support strip mounting a plurality of UV light sources, and arranging the support strip on the input surface so that the UV light sources face the input surface to direct UV radiation to the meter engaging surface. The support strip may carry at least one lens to focus the UV light from the UV light sources onto the meter engaging surface. The lens may conveniently be a rod lens. The distance from the input surface of the device to the meter engaging surface may be greater than 20mm. At distances greater than 20mm, the rod lens provides useful focussing to maximise the delivered light for curing at the interface between the meter glass and the meter engaging end surface.

The device may be made by the method of the preceding aspect of the invention. The block of material may be cast in a mould and the surface of the mould which forms the meter engaging end surface of the block is preferably textured and may be rough, so that the meter engaging end surface of the cast block is textured or rough.

Embodiments of the invention will now be described by way of example and with reference to the accompanying drawings, in which:
Figure 1 is a side elevation in cross section of the device of the embodiment on a utility meter in a ground pit with an access cover;
Figure 2 is a front elevation of the device of the embodiment on a utility meter in a meter cupboard on a wall, cupboard door not shown;
Figure 3 is a side elevation of the cupboard of Figure 2;
Figure 4 is a plan view of the device of the embodiment on a utility meter;
Figure 5 is a side elevation in cross section of the device of the embodiment;
Figure 6 is a perspective view from above of the device of the embodiment;
Figure 7 is a perspective view from above of a casing of the device of the embodiment;
Figure 8 is an underneath perspective view of the device of the embodiment;
Figure 9 is an underneath plan view of the casing of Fig 7;
Figure 10 is a side view of the casing of Fig 7;
Figure 11 is an underneath plan view of the casing and PCB of the embodiment;
Figure 12 is a side elevation in cross section of the casing and PCB of the embodiment;
Figure 13 is a perspective view from above of the device of the embodiment with a curing strip thereon;
Figure 14 is a perspective view from below of the device of the embodiment with the curing strip being offered up;
Figure 15 is a side view of the device of the embodiment on a meter face with the curing strip;
Figure 16 is an underneath plan view of the curing strip of the embodiment;
Figure 17 is an end elevation of the curing strip of the embodiment;
Figure 18 is a side elevation of the curing strip of the embodiment;
Figure 19 is an end elevation of the curing strip of the embodiment showing the emitted light pattern;
Figure 20 is a side elevation of the curing strip of the embodiment showing the emitted light pattern;
Figure 21 is an end elevation of the curing strip of embodiment with a rod lens showing the emitted light pattern;
Figure 22 is a side elevation of the curing strip of the embodiment with a rod lens showing the emitted light pattern;
Figure 23 is an underneath plan view of a PCB of the device of the embodiment;
Figure 24 is a side elevation of the PCB of Fig 23;
Figure 25 is a top plan view of the PCB of Fig 23, not showing the batteries; and
Figure 26 is a top plan view of the PCB of Fig 23 showing the batteries.

The device 4 of the embodiment of the invention comprises a block or prism 15 in a casing 13, and a PCB 20.

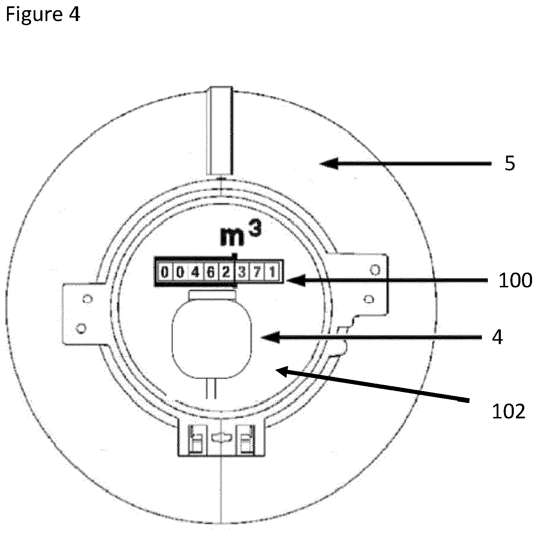

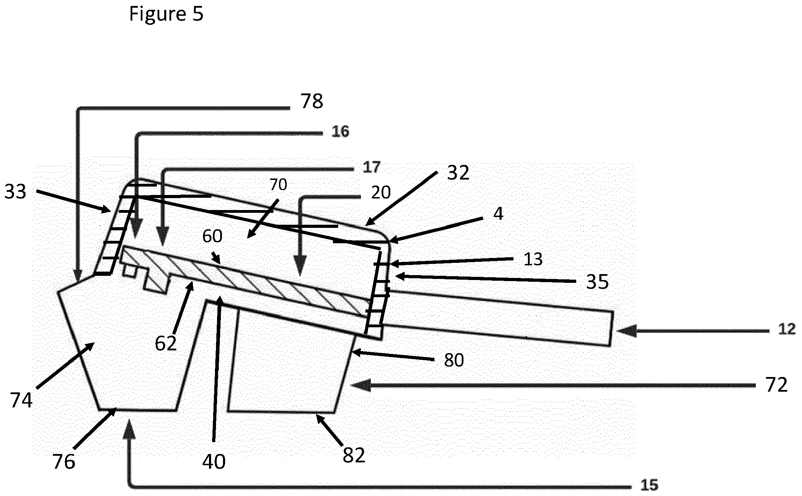

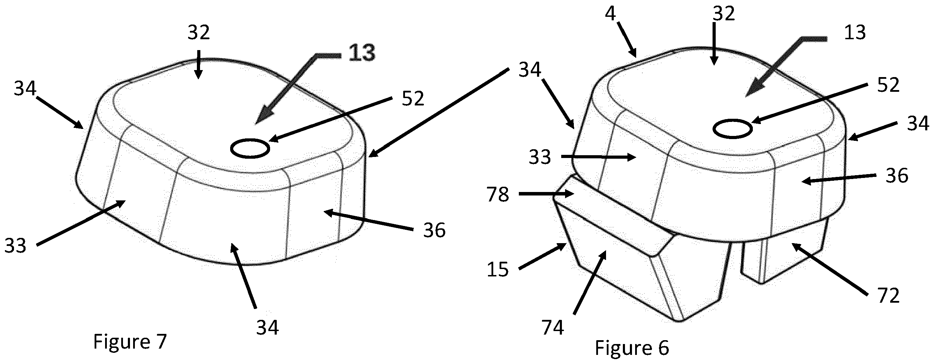

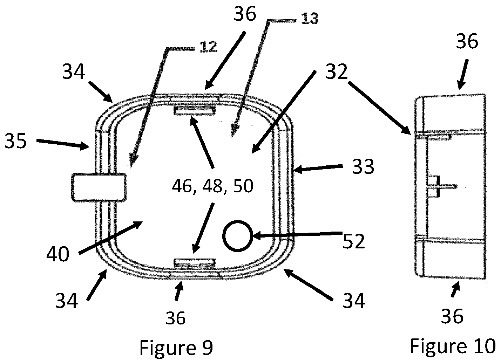

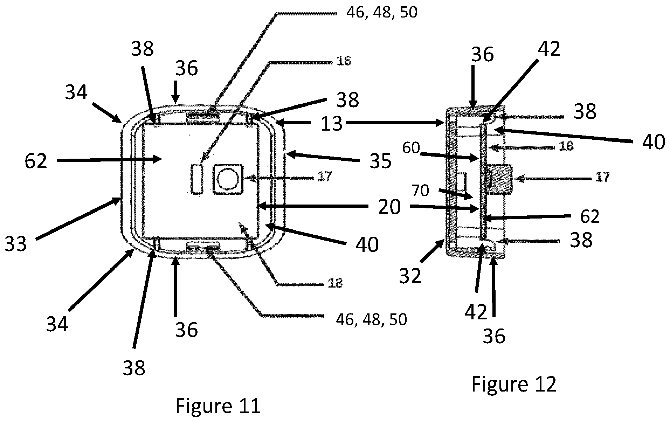

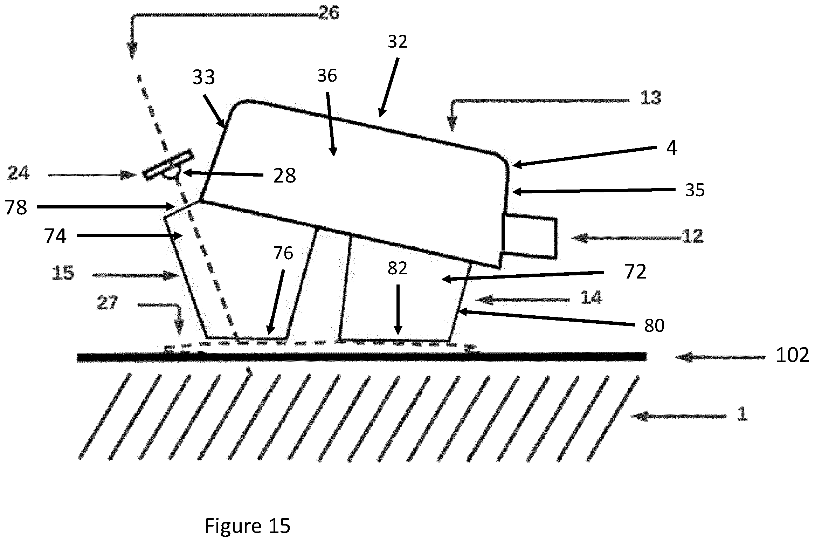

The casing 13 may be injection moulded from opaque plastics material. As shown in particular in figures 4 to 15, the casing 13 is generally in the form of an upturned rectangular tray or cup with a flat top 32, sides 33, 35, 36, and rounded corners 34. Two opposite sides 36 of the casing carry two spaced ribs 38 extending into the cavity 40 of the casing 13. The ribs 38 on each side face each other. Each rib 38 includes a step 42. Between the two ribs 38 on each of the two sides 36 is provided a clip 46. Each clip 46 depends from the top 32 adjacent one of the said opposite sides 36. Each clip 46 is in the form of a tab 48 and includes an inwardly extending undercut barb 50 near the lower end thereof. The casing 13 has a window 52 in the top 32 adjacent one of the corners.

To construct the device 4, the PCB 20 is clipped into the casing 13. To do this, the PCB is offered up to the casing 13 and pushed into the cavity 40 so that the upwardly facing side 60 of the PCB 20 comes to rest on the steps 42 of the ribs 38. In so doing, the clips 46 will be forced apart by the PCB 20 as it travels into the cavity 40, the clips 46 bending resiliently towards the sides 36. Once the barbs 50 pass the downwardly facing side 62 of the PCB 20, the clips 46 will snap behind the PCB 20 to hold it in place in the casing 13.

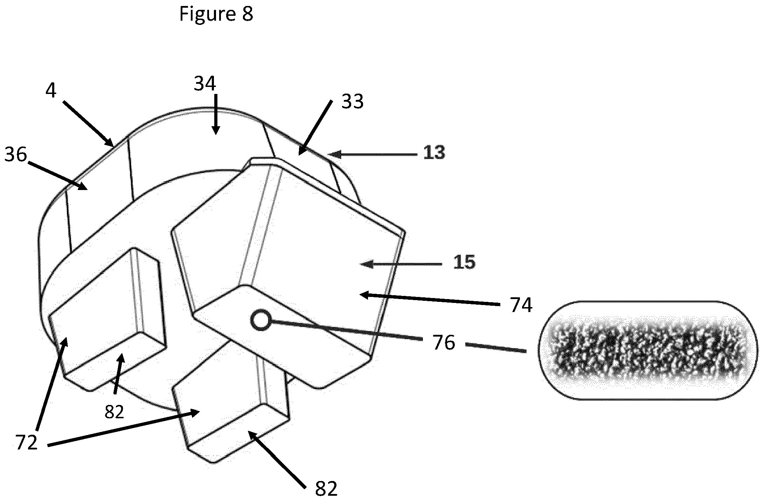

The block 15 is then injection moulded. So the casing 13 with the PCB 20 clipped into it is placed in an injection moulding machine. Clear plastics material is then injection moulded to form the block 15. The plastics material will flow around the PCB 20 to fill the gap 70 in the cavity 40 behind the PCB 20 and will fully encapsulate the PCB 20. The mould (not shown) is shaped to form three depending feet 72, 74. There is one large foot 74 at the front side 33 of the casing 13. The foot 74 extends over most of the width of the side 33, and presents a substantially rectangular lower surface 76. The lower surface 76 of the large foot 74 is rough, as shown in Fig 8. This is achieved by texturing the corresponding surface of the mould. The foot 74 also extends out beyond the side 33 of the casing 13 to form an upwardly facing ledge 78 along its full width adjacent the lower edge of the side 33. The other two feet 72 are generally rectangular and lie side by side behind the large foot 74. The rear sides 80 of the rear feet 72 depend from adjacent the rear side 35 of the casing 13. The rear feet 72 have an axis extending towards the large foot 74. The lower surfaces 82 of the rear feet 72 are in a common plane with the lower surface 76 of the large foot 74.

The block 15 may be made from an optically clear casting resin such as Crystalcast 1000 (trade mark).

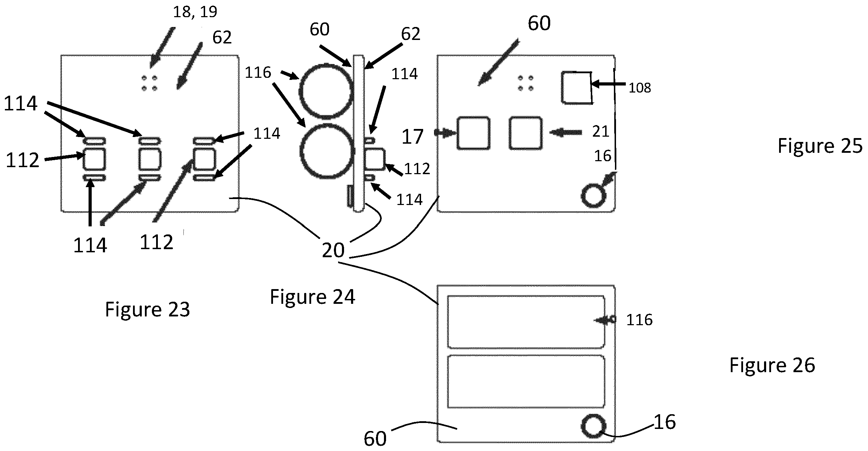

Figures 23 to 26 show the PCB 20. The PCB 20 carries on its top surface 60 an ambient light sensor 16, a local processing element or CPU 17, a wireless communications element 18, a wired communications interface 19, a vibration detecting element 21, a power conditioning subcircuit and two batteries 116. On its lower surface 62, the PCB 20 carries three microcameras 112 in a row, and an infra red LED optical radiation source 114 on each side of each camera 112. The cameras 112 are directed down through the large foot 74 of the prism 15. A processor 17 is associated with the cameras 112 and receives images from them, which are transmitted back to a remote centre over the wired or wireless connection 18, 19. Two batteries 116 are carried by the PCB 20 on the upper surface 60.

The device implementation is specifically optimised for long term operation with a battery. This requires special consideration for the electronic component design and selection as well as a more considered approach with the detection algorithm design. For application when an external power source is available, a wired interface can be used to eliminate a finite operating lifetime compared to the battery product. A variant of the ARM CORTEX can be used, a processing core commonly available from multiple silicon vendors.

The bottom surface 76 of the large foot 74 of the block 15 is rough, achieved by the corresponding surface in the metal tool having a pitted surface. This will ensure that the block 15 has an effective greater surface area for bonding than that of the glass or plastic meter face 102, thus increasing the grip on the device 4 side of the bond. This allows the device 4 to be removed from the meter surface 102 with the application of a shearing force to greatly increase the chance of the bond failing meter side, which results in a majority of adhesive remaining attached to the device 4 to leave the meter surface 102 clean. This is an important requirement for the meter owner. The pitted surface 76 on the block 4 looks visually opaque but the adhesive fills all pits resulting in a perfect optical path once cured.

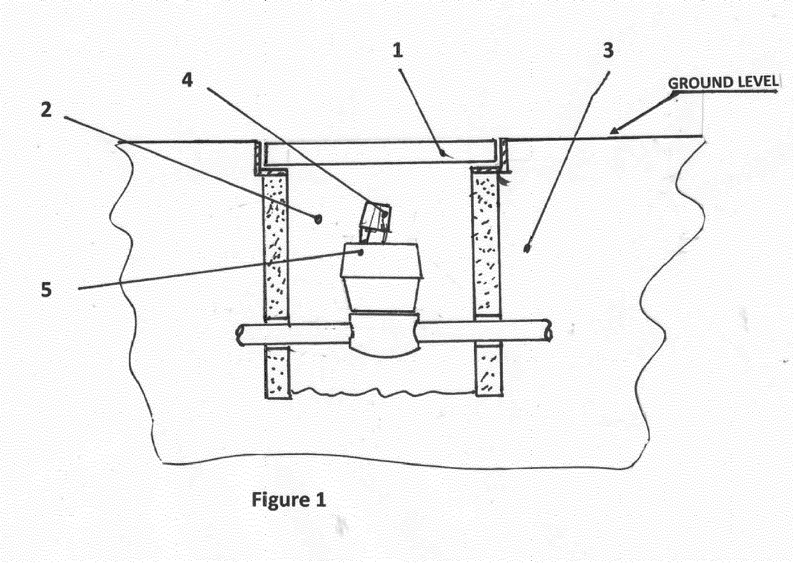

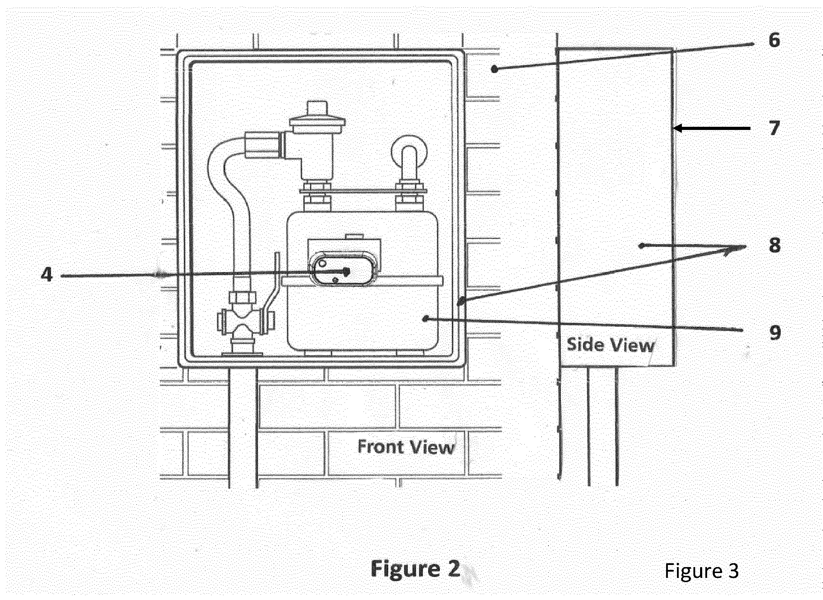

In use, a utility meter 5 will be located in a ground pit 2 as shown in Fig 1, or in a wall mounted cupboard 8, as shown in Fig 2.

In the ground pit 2 situation, a pit 2 in the ground 3 creates a chamber in the ground closed by an access cover 1. A utility meter 5, usually a water meter, is found on a pipe at the bottom of the pit 2.

In the case of a wall mounted cupboard 8, a cupboard 8 is mounted on a wall 6 and the cupboard 8 has a door 7. Inside the cupboard 8 is a cable or pipe and on the cable or pipe is a utility meter 9.

The utility meter 5, 9 has a register display 100 consisting of a row or string of numbers. This may be an LCD or LED display, or a mechanical display, such as a serial arrangement of adjacent rings which turn to display different numbers on their outer periphery, as shown in Fig 4. The device 4 of the invention can be mounted on the utility meter 5, 9. The register display 100 will be behind a transparent cover 102 in the form of a layer of glass or transparent plastic. As shown in Fig 4, the device 4 is mounted offset from the register display 100. This means that the register display 100 can still be read by a user looking at the display 100. To attach the device 4, the surface of the transparent cover 102 adjacent the register display 100 is first cleaned to remove any dirt or grease. A UV curable adhesive, such as LOCTITE AA 3491 (trade mark), is then applied to the lower surface 76 of the large foot 74, and the device 10 is placed on the transparent cover 102. The position of the device 4 is then adjusted, so that the cameras are aligned with the register display 100.

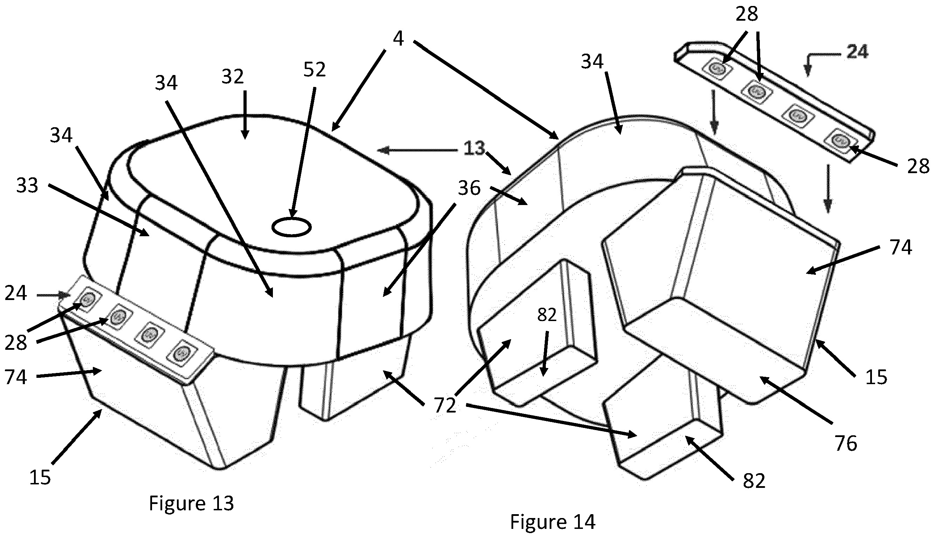

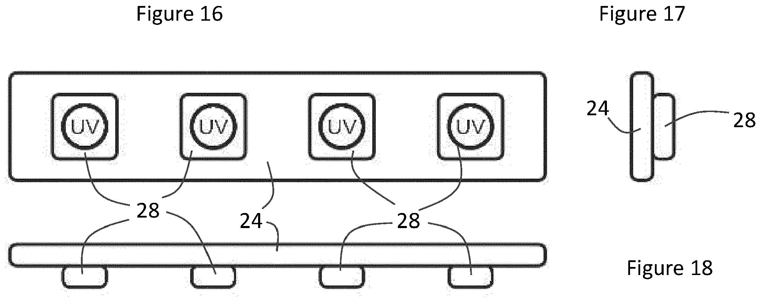

The UV adhesive 27 is then cured by shining UV light through the ledge or step 78 down to the lower surface 76 of the large foot 74. This is done using a metal PCB strip 24 which carries a plurality of UV LEDs 28, in this case, four LEDs 28, see Figures 13 to 20. Each UV LED PCB 24 will sit in an enclosure (not shown) that then sits precisely over the device 4 with the PCB strip 24 on the step 78 with the UV LEDs 28 facing the step 78 to shine UV light through the step 78 into the block 15 and down to the meter engaging surface 76. Each LED 28 may be a 4.4mm × 4.4mm LED with 1.2W flux output at 2.7W input power.

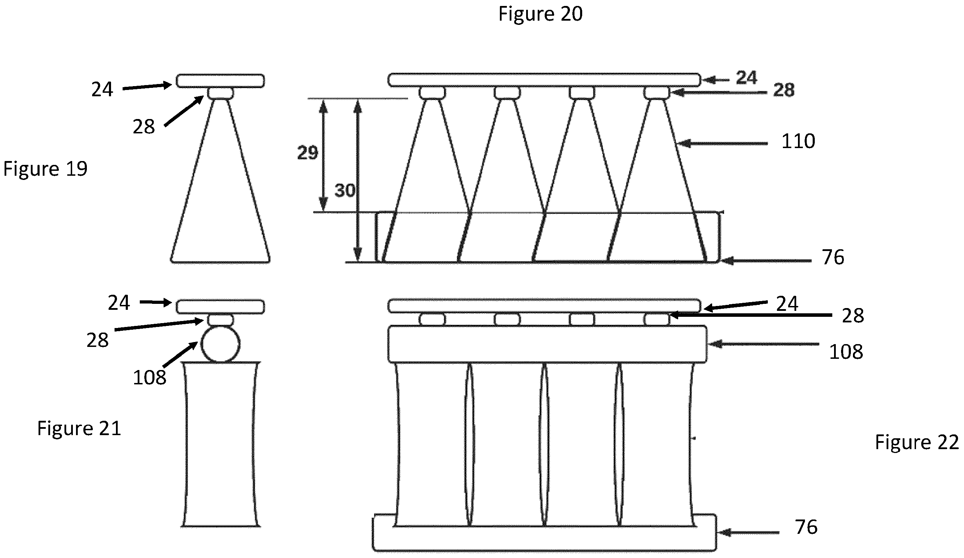

The UV energy density presented at the bonding surface will significantly depend on the distance from the LEDs 28 to the bonding surface, i.e., the length of the block 15 from the step 78 to the lower surface 76 of the large foot 74. If the distance is small, less than 15-20mm (29 to 30 in Fig 20), then the LEDs 28 will likely not require any lens design, relying on the beam angle 110 of the LEDs 28 to provide enough of an even coverage to effectively cure the adhesive. If the distance is greater than 20mm then optical design techniques should be employed to maximise the UV LED beam delivery at the surface 76. This can be as simple as a glass rod lens 108 which effectively directs the diverging UV light from the LEDs 28 downwards towards the surface 76, maximising delivered light for curing, as shown in Figs 21 and 22. A rod lens 108 coupled with an increased number of UV LEDs 28 driven at a higher power level will support distances up to 40mm. The curing time can be optimised between 10-30 seconds depending on exact physical implementations.

Important to efficiency is matching the wavelengths of the UV adhesive and LEDs 28. 365nm has been selected, but so long as these are matched, alternative UV adhesives and LEDs can be implemented.

RF technologies suitable for the wireless link are Bluetooth 4/5 for local connection to monitoring station, GSM, NBiOT and CATM1 for direct to mobile network operators' infrastructure and LoRa (or alternative) operating at 433, 868 or 915 MHz in the licence free bands for direct to custom provided base stations and infrastructure. Wired links are based around serial communications over physical layers providing single ended (RS232) or differential pair (RS485) or similar industrial standards.

The simplest implementation, supporting the smallest physical implementation of device, may have only a small amount of signal conditioning to allow the sensor information to be available on the communications cable to an external data-logger. The external data-logger will then do all power management and analysis.

The most complex, and largest physical implementation of device may include an integrated battery, analysis processor and wireless communication sub-system such as bluetooth or LoRa.

The invention reduces the risk of small area contamination preventing optical efficiency. Encapsulation of the PCB 20 in the block 15 material provides a completely waterproof solution.

Creating the optical path in this manner significantly reduces compounding alignment errors that would otherwise be present using separate parts to manufacture the device. This means positioning the device on the surface of the meter, to capture the surface area of interest, will be highly consistent for each specific meter type greatly simplifying installation. Creating an optical pathway insensitive to contamination or other environmental conditions will result in consistent optical measurements and ultimately simplify the detection algorithm implementation.

As an alternative to UV curable adhesive, a two component epoxy clear adhesive could be used, such as Loctite EA 9455 (trade mark). As a further alternative, an optically clear double sided adhesive tape could be used. Although the device has been designed to be bonded to meters in harsh environments, the device can also be bonded with optical tape when environmental conditions are favourable, normally indoor meter cabinets. In this use case, the optical path is still perfectly preserved at the point of installation as the tape provides the semi-permanent optical interface between the meter and the device. Removal also benefits from the rough block surface 76 as in the case of UV adhesive and in most cases the tape will remain attached to the block 15 when shearing force is applied.

The UV-LED PCB 24 may be made of aluminium to improve thermal efficiency to support increased energy density.

As an alternative to injection moulding, other types of casting may be used, in particular, vacuum casting or RIM casting.

Fixing an optical sensor to the surface of a meter can be achieved in a number of ways;
- using a mechanical strapping system. This relies on minimal contamination between the meter surface and the device and is only suitable for indoor installations. As well as physical contamination such as dirty water or chemical waste, any air void between the surfaces will result in a 'micro-climate' and the potential for surface condensation.
- using a 2-part optically clear adhesive. This solution requires that the device is accurately held for the curing time. Movement during this time can create surfaces in the bond which will impact on the optical characteristics. A rapid curing time requires locating the correct alignment position before the adhesive sets, a slow curing time requires the device is mechanically held in place for an extended time.
- using a UV based adhesive. This solution has the advantage of allowing as much time is needed to find the correct alignment position before activating the UV light source to cure.

There may be between one and four UV LEDs 28 depending on the size of the device 4, in particular its width.

In another embodiment, the LEDs 114 alongside the cameras 112 may not be infra red but may be another wavelength of optical radiation, or may be multispectral.

In another embodiment, there may be only one battery 116.

In another embodiment, the device may not be battery powered but may be powered by an external power source connected via a cable into the PCB, the end of the cable being sealed in the block.

## Claims

1. A meter reading device comprising a plurality of cameras to be directed at a meter display, the cameras being mounted in and encapsulated by a unitary block of material which is transparent to optical radiation, the block defining a meter engaging end surface, the cameras being directed towards the meter engaging end surface of the block.

2. A device as claimed in claim 1, wherein the block defines an input surface through which optical radiation can be directed to pass through the block to the meter engaging surface.

3. A meter reading device comprising a plurality of cameras to be directed at a meter display, the cameras being directed through a unitary block of material which is transparent to optical radiation, the block defining a meter engaging end surface, the cameras being directed towards the meter engaging end surface of the block, wherein the block defines an input surface through which optical radiation can be directed to pass through the block to the meter engaging surface.

4. A device as claimed in claim 2 or claim 3, wherein the block includes a step defining the input surface, and optionally wherein the step is offset to one side of the path from the cameras to the meter engaging surface and optionally wherein the step is to one side of the cameras, optionally wherein the device includes a cover, the cover covering part of the block to protect the block, the step extending beyond the cover.

5. A device as claimed in any of claims 2 to 4, wherein the input surface is at least two thirds as wide as the meter engaging surface, optionally wherein the input surface is at least 80% as wide as the meter engaging surface, optionally wherein the input surface is at least as wide as the meter engaging surface, optionally wherein the input surface is substantially the same width as the meter engaging surface, optionally wherein the input surface is at no greater than 45 degrees to the meter engaging surface, optionally wherein the input surface is at no greater than 30 degrees to the meter engaging surface.

6. A device as claimed in any preceding claim, wherein the distance between the cameras and the meter engaging end surface is 15mm or more, optionally wherein the distance between the cameras and the meter engaging end surface is 20mm or more, optionally wherein the distance between the cameras and the meter engaging end surface is 40mm or less optionally wherein the distance between the cameras and the meter engaging end surface is 30mm or less optionally wherein the distance between the cameras and the meter engaging end surface is 25mm or less.

7. A device as claimed in any preceding claim, wherein the device also includes at least one source of optical radiation directed towards the meter engaging end surface of the block to illuminate the meter, the at least one source of optical radiation being mounted in the block.

8. A device as claimed in any preceding claim, wherein the device also includes a memory mounted in the block, optionally wherein the device also includes communication means for communicating data from the cameras to an external location, the communication means being mounted in the block, optionally wherein the device also includes a processor mounted in the block, optionally wherein the device also includes a battery, optionally wherein the battery is mounted in the block.

9. A device as claimed in any preceding claim, wherein the device also includes a cable through which an output signal can be sent externally, the end of the cable being sealed in the block, optionally wherein the device also includes a cable through which the device can be powered externally, the end of the cable being sealed in the block.

10. A device as claimed in any preceding claim, wherein the cameras are mounted on a PCB mounted in the block, optionally wherein all of the electronics of the device is mounted on one or more PCBs and mounted in the block.

11. A device as claimed in any preceding claim, wherein the meter engaging surface is textured, optionally wherein the meter engaging surface is rough.

12. A utility meter with a device as claimed in any preceding claim adhered to the meter so that the cameras are directed at the alphanumeric display of the meter, optionally wherein the device is adhered to the meter by UV cured adhesive.

13. A method of making a meter reading device, the method comprising the steps of: holding a plurality of cameras in place; casting a block of material around the cameras so that the cameras are surrounded by the block, and so that the block defines a meter engaging end surface, and so that the cameras are directed towards the meter engaging end surface of the block, the block of material being transparent to optical radiation.

14. A method as claimed in claim 13, wherein the cameras are mounted on a board which is surrounded by the block, optionally wherein the cameras are mounted on a PCB mounted in the block, optionally wherein all of the electronics of the device is mounted on the PCB and mounted in the block.

15. A method as claimed in claim 13 or claim 14, wherein the device includes a cover, and the method includes casting the block of material onto the cover, optionally wherein the cover is generally tray shaped, optionally wherein the block substantially fills the cover.

16. A method as claimed in claim 15, when dependent on claim 14, wherein the cover includes means for supporting the PCB board, optionally wherein the cover includes two opposed walls, each opposed wall including at least one feature to support the board, optionally wherein the cover includes clip means and the board is clipped onto the cover before casting, optionally wherein the cover clip means comprises two opposed clips to clip the board.

17. A method in relation to a meter reading device, the method comprising the steps of: providing a plurality of cameras in a block of material, the block of material being transparent to optical radiation, the block defining a meter engaging end surface, the cameras being directed towards the meter engaging end surface of the block, the block also defining an input surface, the method including the steps of: applying UV curable adhesive to one or both of the meter and the meter engaging end surface, placing the device in position on the meter, and directing UV radiation through the input surface of the block to the meter engaging surface to cure the UV curable adhesive.

18. A method as claimed in claim 17, wherein the method includes providing a support strip mounting a plurality of UV light sources, and arranging the support strip on the input surface so that the UV light sources face the input surface to direct UV radiation to the meter engaging surface, optionally wherein the support strip carries at least one lens to focus the UV light from the UV light sources onto the meter engaging surface, optionally wherein the lens is a rod lens.

19. A method as claimed in claim 17 or claim 18, wherein the distance from the input surface of the device to the meter engaging surface is greater than 20mm.

20. A method as claimed in claim 17, 18 or 19, wherein the device is made by the method of any of claims 13 to 16.

21. A method as claimed in claim 20, wherein the block of material is cast in a mould and the surface of the mould which forms the meter engaging end surface of the block is textured, so that the meter engaging end surface of the cast block is textured, optionally wherein the surface of the mould which forms the meter engaging end surface of the block is rough, so that the meter engaging end surface of the cast block is rough.
